(19)

Europäisches
Patentamt
European
Patent Office
Office européen
des brevets

(11)     **EP 2 937 839 A1**

(12)     **EUROPEAN PATENT APPLICATION**

(43) Date of publication:
**28.10.2015  Bulletin 2015/44**

(51) Int Cl.:
**G06T 17/00** *(2006.01)*        **G06T 19/20** *(2011.01)*

(21) Application number: **14305593.7**

(22) Date of filing: **22.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Tytgat, Donny
2018 Antwerp (BE)**

(74) Representative: **ALU Antw Patent Attorneys
Intellectual Property and Standards
Copernicuslaan 50
2018 Antwerp (BE)**

Remarks:
Amended claims in accordance with Rule 137(2)
EPC.

(54)     **Method and device for determining a morphable 3D model**

(57)     Embodiments relates to a method for determining a morphable 3D model comprising a set of example models, said method being executed by a morphable 3D model determining device and comprising:
- Obtaining 3D data specifying at least two example surfaces,
- Determining implicit surfaces corresponding to the example surfaces, wherein an implicit surface is defined by a 3D field function, wherein said implicit surface is an isosurface through the 3D field,
- Determining the example models in function of the implicit surfaces.

FIG. 2

EP 2 937 839 A1

## Description

FIELD OF THE INVENTION

The present invention relates to the field of 3D computer graphics. In particular, the present invention relates to dynamic morphable 3D models.

BACKGROUND

A dynamic morphable 3D model may be specified by a set of example models, each example model comprising an example surface specified by a triangle mesh. In order to embed the required "states" of the model, linear combinations are used with a number of example meshes as a base. When modeling a face for example, one will have a number of meshes of the same face, but with different expressions. By using linear combinations between these expressions, one can create new ones that were not part of the example set.

A problem with this solution is that one needs to find dense correspondences between the vertices in the example models. This needs to be a 1-to-1 correspondence, so all examples should furthermore have the same number of vertices. Making such correspondences is not only very time consuming, it also introduces errors when the correspondences are less than perfect. This makes it unsuitable for online learning of morphable 3D models, e.g. directly from live captured data. Furthermore this correspondence requirement introduces a limitation to the topology of the objects that can be modeled. All of the modeled objects will have the same topology, namely the one of the reference that was used for calculating the 1-to-1 vertex correspondences. As such one cannot directly model objects that have changing topologies.

SUMMARY

It is thus an object of embodiments of the present invention to propose a method and a device for determining a morphable 3D model, which do not show the inherent shortcomings of the prior art.

Accordingly, embodiments relate to a method for determining a morphable 3D model comprising a set of example models, said method being executed by a morphable 3D model determining device and comprising:

- Obtaining 3D data specifying at least two example surfaces,
- Determining implicit surfaces corresponding to the example surfaces, wherein an implicit surface is defined by a 3D field function, wherein said implicit surface is an isosurface through the 3D field,
- Determining the example models in function of the implicit surfaces.

Correspondingly, embodiments relate to a device for determining a morphable 3D model comprising a set of example models, comprising:

- means for obtaining 3D data specifying at least two example surfaces,
- means for determining implicit surfaces corresponding to the example surfaces, wherein an implicit surface is defined by a 3D field function, wherein said implicit surface is an isosurface through the 3D field,
- means for determining the example models in function of the implicit surfaces.

Determining the example models in function of the implicit surfaces may comprise:

- determining a first set of example models comprising the implicit surfaces,
- determining a second set of example models by applying principal component analysis to the first set of example models.

The method may comprise aligning the example surfaces by determining three corresponding vertices.

In an embodiment, the example surfaces are determined in function of captured data.

In an embodiment, the morphable surface comprises a human face, the example surfaces corresponding to various facial expressions.

Embodiments also relate to a method for representing a state of a morphable surface, wherein the morphable surface is defined by a morphable 3D model comprising a set of example models, where an example model comprises a 3D field function defining an implicit surface as an isosurface through the field, said method being executed by a source device and comprising:

- obtaining 3D data representative of an input surface, which is a state of the morphable surface,
- determining a model corresponding to the input surface, wherein the geometry of the input surface SI is specified by an implicit surface,
- determining coefficients in function of the input model and the example models of the morphable 3D model, such that the input model is approximated by a linear combination of the example models.

The method may comprise transmitting the coefficients to another device.

Correspondingly, embodiment relate to a device for representing a state of a morphable surface, wherein the morphable surface is defined by a morphable 3D model comprising a set of example models, where an example model comprises a 3D field function defining an implicit surface as an isosurface through the field, comprising:

- means for obtaining 3D data representative of an input surface, which is a state of the morphable surface,

- means for determining a model corresponding to the input surface, wherein the geometry of the input surface is specified by an implicit surface,
- means for determining coefficients in function of the input model and the example models of the morphable 3D model, such that the input model is approximated by a linear combination of the example models.

Embodiments also relate to a method for determining a state of a morphable surface, wherein the morphable surface is defined by a morphable 3D model comprising a set of example models, where an example model comprises a 3D field function defining an implicit surface as an isosurface through the field, said method being executed by a destination device and comprising:

- obtaining coefficients representative of the state of the morphable surface,
- determining a model in function of the coefficient, wherein the model is a linear combination of the example models.

The method may comprise displaying the model.

Correspondingly, embodiments relate to for determining a state of a morphable surface, wherein the morphable surface is defined by a morphable 3D model comprising a set of example models, where an example model comprises a 3D field function defining an implicit surface as an isosurface through the field, comprising:

- means for obtaining coefficients representative of the state of the morphable surface,
- means for determining a model in function of the coefficient, wherein the model is a linear combination of the example models.

Embodiments also relate to a computer program comprising instructions for performing one of the methods mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 shows a system for a communication application using morphable 3D model,
Figure 2 is a flowchart of a method for determining a morphable 3D model,
Figure 3 is a flowchart of a method for determining coefficient, in function of a state of a morphable surface,
Figure 4 is a method for determining the state of a morphable surface, in function of coefficients, and
Figure 5 is a structural view of a device of the system of Figure 1.

DESCRIPTION OF EMBODIMENTS

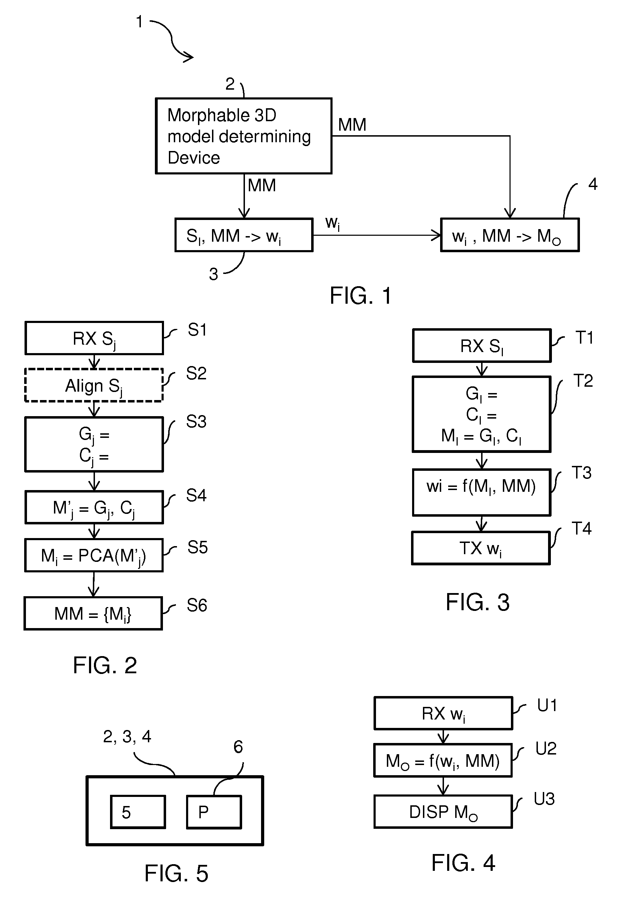

**Figure 1** shows a system 1 for a communication application using dynamic morphable 3D models. The system 1 comprises a morphable 3D model determining device 2, a source device 3 and a destination device 4.

The morphable 3D model determining device 2 determines a morphable 3D model MM which comprises a set of example models $M_i$. A state of a morphable surface may be represented by a linear combination of the example models $M_i$. Accordingly, provided that the source device 3 and the destination device 4 know the morphable 3D model MM, a state of the morphable surface, for example its current state, may be transmitted from the source device 3 to the destination device 4 by transmitting the coefficients $w_i$ of the linear combination. Compared with transmitting a completed specification of the surface, for example with a triangles mesh, this reduced the required bandwidth.

In the system 1, the example models $M_i$ represent the example surfaces as implicit surfaces. This provides advantages in terms of computation complexity, as will be apparent from the following description of Figures 2 to 4.

**Figure 2** is a flowchart of a method for determining a morphable 3D model MM, executed by the morphable 3D model determining device 2.

Initially, the morphable 3D model determining device 2 obtains 3D data representative of example surfaces $S_i$ (step S1). An example surface $S_i$ may comprise for example a triangles mesh for specifying the geometry of the surface and color data for specifying the color of the triangles. The example surfaces $S_i$ may have been defined by a 3D graphic edition software and/or captured from a morphable surface, such as a human face, for example by using a stereoscopic camera or a time-of-flight enabled camera.

Here, we assume that the example surfaces $S_i$ use the same reference coordinates system, wherein the morphable surface is always positioned in the same place, but with different shapes (for example different facial expressions in the case of a face). If this is not the case, in an embodiment, the morphable 3D model determining device 2 may align the example surfaces $S_i$ (step S2). In contrast to the prior art, only rigid alignment is needed. Such alignment between two example surfaces $S_i$ can be done with the determination of only three corresponding vertices in the two example surfaces $S_i$ and is therefore computationally less complex that determining dense correspondences between all the vertices.

Then, the morphable 3D model determining device 2 determines a geometry vector $G_i$ and optionally an appearance vector $C_i$ in function of each example surface $S_i$ (step S3).

The geometry vector $G_i$ represents the geometry of the example surface $S_i$ as an implicit surface. An implicit surface is defined by a 3D field function $I(x, y, z)$, where the implicit surface is an isosurface through the 3D field. More precisely, for a point p of coordinate $(x, y, z)$, the 3D field function $I(x, y, z)$ is equal to the signed distance d between the point p and the nearest point on the example surface $S_i$. When a point is inside the object delimited by the example surface $S_i$, the sign is different than when it is outside the object. E.g. Inside: positive d; outside: negative d. In order to make computation tractable, the 3D field function $I(x, y, z)$ is sampled. In an embodiment, the sampling is regular, and the same for all geometry vectors $G_i$. For example, the 3D space is sampled inside a cube ($[x\_min, x\_max]$, $[y\_min, y\_max]$, $[z\_min, z\_max]$) with respectively $s\_x$, $s\_y$ and $s\_z$ samples at regular intervals. A geometry vector $G_i$ then comprises $s\_x * s\_y * s\_z$ values.

The geometry vector $G_i$ does not include appearance information however. In order to include this appearance information, not only the nearest distance to the surface d is determined, but also the color of this nearest surface point. For example, an (r,g,b) triple is used to specify the color of such a point. As such, for every sampled point in 3D space, we do not only have the distance d, but also the triple (r,g,b). The appearance vector $C_i$ comprises the concatenation of the triples (r,g,b).

An example model $M'_i$ comprises the concatenation of a geometry vector $G_i$ and the corresponding appearance vector $C_i$ (step S4).

At this stage, the set of example models $M'_i$ defines a morphable 3D model of the morphable surface. In one embodiment, the morphable 3D model comprising the example models $M'_i$ is used as such: A state of the morphable surface may be represented by a linear combination of the example models $M'_i$. However, this is not very optimal. Indeed, the example models $M'_i$ represents the same geometries as the example surface $S_i$. Since the example surface $S_i$ may have been selected arbitrarily, this may not be the best manner for representing the morphable surface.

Therefore, in an embodiment, the morphable 3D model determining device 2 determines a second set of example models $M_i$ in function of the full set of example models $M'_i$ (step S5). The example models $M'_i$ are determined for example by applying Principal Component Analysis (PCA) on the full set of example models $M'_i$. It may be pointed out that the example models $M'_i$ are not a subset of the example models $M'_i$ : new examples are generated by the PCA process. More precisely, the morphable 3D model determining device 2 first makes an average model from all examples models $M'_i$, and the differences with this average model are taken as input for PCA. PCA outputs bases along with singular values that indicate their embedded variance that is 'captured' by these bases. As such, one can select the most important bases as example models $M_i$ to make the linear combination rather than all example models $M'_i$.

In this case, the determined morphable 3D model MM comprises the example model $M_i$ selected by the PCA (step S6). With the example models $M_i$, the number of linear combination coefficient necessary for specifying a state of the morphable surface with a desired accuracy is lower than with the example models $M'_i$.

Although determining a linear combination of the example models $M_i$ or $M'_i$, wherein geometry is specified by implicit surfaces, is conceptually very different than determining a linear combination of geometries specified by triangles meshes, it appears that, unexpectedly, such linear combination also allows representing a status of a morphable surface. Indeed, applying the method of Figure 2 for building a morphable model of a face allows reconstructing faces with various expressions by linear combination of the example models.

Moreover, the method of Figure 2 does not require determination of dense correspondences between the vertices of triangles meshes, and has therefore a lower computational complexity. Additionally, reducing the number of example models by a Principal Component Analysis (step S5) contributes to the lower computational complexity. Thirdly, there are no topological restrictions to the modeled dynamic object.

**Figure 3** is a flowchart of a method for representing a state of a morphable surface, executed by the source device 3.

We assume that the source device 3 knows the morphable 3D model MM of a morphable surface.

Initially, the source device 3 obtains 3D data representative of an input surface $S_I$, which can be approximated by a state of the morphable surface modeled by the morphable 3D model MM (step T1). The input surface $S_I$ may comprise for example a triangles mesh for specifying the geometry of the surface and color data for specifying the color of the triangles. The input surface $S_I$ may have been defined by a 3D graphic edition software and/or captured, for example by using a stereoscopic camera or a time-of-flight enabled camera.

Then, the source device 3 determines an input model $M'_i$ corresponding to the input surface $S_I$ (step T2). This include determines a geometry vector $G_I$ and an appearance vector $C_I$, in a similar manner as in step S3 of Figure 2. Accordingly, in the input model $M_I$, the geometry of the input surface $S_I$ is specified by an implicit surface.

After that, the source device 3 determines coefficient $w_i$ in function of the input model $M_I$ and the example models $M_i$ of the morphable 3D model MM, such that the input model $M_I$ is approximated by a linear combination of the example models $M_i$:

$$M_I = w_1\,M_1 + w_2\,M_2 + \ldots + w_N\,M_N$$

Here, determining the coefficients $w_i$ does not require determination of dense correspondences between vertices and has therefore low computational complexity.

The coefficients $w_i$ represent the input surface $S_I$, that is the state the morphable surface, and may be transmitted to another device (step T4) and/or stored.

**Figure 4** is a flowchart of a method for determining a state of a morphable surface, executed by the destination device 4.

We assume that the destination device 4 knows the morphable 3D model MM of a morphable surface.

Initially, the destination device 4 obtains coefficients $w_i$ representative of a state of the morphable surface (step U1). For example, the destination device 4 receives the coefficients $w_i$ from the source device 3 or retrieves coefficients $w_i$ stored in memory.

Then, the destination device 4 determines an output model $M_O$ which represents a state of the morphable surface, by linear combination of the example models $M_i$ of the morphable 3D model MM (step U2):

$$M_O = w_1\,M_1 + w_2\,M_2 + \ldots + w_N\,M_N$$

The output model $M_O$ comprises a geometry vector Go and an appearance vector $C_O$. In the output model $M_O$, the geometry of the surface is specified by the implicit surface of the geometry vector Go.

The output model $M_O$ may then be displayed (step U3), stored, converted to another format (for example based on triangles mesh),...

In a typical communication application, a first user terminal comprises the morphable 3D model determining device 2, the source device 3 and a capture device (not shown), and a second user terminal comprises the destination device 4 and a display.

In an initialization phase, the capture device of the first user terminal acquires 3D data representative of the face of a first user with various facial expressions. The morphable 3D model determining device 2 determines a morphable 3D model MM of the face of the first user and transmits it to the source device 3 and the destination device 4.

Then, in a communication phase, the capture device of the first user terminal repeatedly acquires 3D data representative of the current state of the face of the first user. The source device 3 determines the coefficients $w_i$ which represent the successive current states of the face and transmit the coefficients $w_i$ to the destination device 4. Since the computational complexity is low, this may be performed in real time even if the processing resources of the first user terminal are limited. The destination device 4 receives the successive sets of

coefficients $w_i$ and determines successive output models $M_O$ corresponding to the successive current states of the faces, and displays it.

This allow a visual communication from the first user terminal to the second user terminal, which, after the initialization phase, only requires a limited bandwidth for transmitting the coefficient $w_i$. Of course, the same technique may be applied from the second user terminal to the first user terminal for bi-directional visual communication.

**Figure 5** is a structural view of a device, which may be the morphable model determining device 2, the source device 3 or the destination device 4. The device of Figure 5 comprises a processor 5 and a memory 6. The memory comprises a computer program P which include instructions executable by the processor 5. The methods of figures 2, 3 or 4 may correspond to the execution of the computer program P by the device of Figure 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining a morphable 3D model (MM) comprising a set of example models ($M_i$), said method being executed by a morphable 3D model determining device (2) and comprising:

   - Obtaining (S1) 3D data specifying at least two example surfaces ($S_i$),
   - Determining (S3) implicit surfaces ($G_i$) corresponding to the example surfaces ($S_i$), wherein an implicit surface is defined by a 3D field function, wherein said implicit surface is an isosurface through the 3D field,
   - Determining the example models ($M_i$) in function of the implicit surfaces ($G_i$).

2. Method according to claim 1, wherein determining the example models ($M_i$) in function of the implicit surfaces ($G_i$) comprises:

   - determining (S4) a first set of example models ($M'_i$) comprising the implicit surfaces ($G_i$),
   - determining (S5) a second set of example models ($M_i$) by applying principal component analysis to the first set of example models ($M'_i$).

3. Method according to claim 1 or 2, comprising a rigid alignment step (S2) the example surfaces ($S_i$).

4. Method according to one of claims 1 to 3, wherein the example surfaces ($S_i$) are determined in function of captured data.

5. Method according to one of claims 1 to 4, wherein the morphable surface comprises a human face, the example surfaces ($S_i$) corresponding to various facial expressions.

6. Method according to one of claims 1 to 5, comprising determining (S3) an appearance vector ($C_i$) corresponding to the example surfaces ($S_i$), wherein an appearance vector ($C_i$) is a 3D field function specifying the color of the nearest point of the corresponding example surface.

7. Device (2) for determining a morphable 3D model (MM) comprising a set of example models ($M_i$), comprising:

   - means (5, 6) for obtaining 3D data specifying at least two example surfaces ($S_i$),
   - means (5, 6) for determining implicit surfaces ($G_i$) corresponding to the example surfaces ($S_i$), wherein an implicit surface ($G_i$) is defined by a 3D field function, wherein said implicit surface is an isosurface through the 3D field,
   - means (5, 6) for determining the example models ($M_i$) in function of the implicit surfaces ($G_i$).

8. Computer program (P) comprising instructions executable by a processor (5) for performing the method for determining a morphable 3D model according to one of claims 1 to 6 when said instructions are executed by a computer.

9. Method for representing a state of a morphable surface, wherein the morphable surface is defined by a morphable 3D model (MM) comprising a set of example models ($M_i$), where an example model ($M_i$) comprises a 3D field function defining an implicit surface as an isosurface through the field, said method being executed by a source device (3) and comprising:

   - obtaining (T1) 3D data representative of an input surface ($S_I$), which is a state of the morphable surface,
   - determining (T2) a model ($M_I$) corresponding to the input surface ($S_I$), wherein the geometry of the input surface ($S_I$) is specified by an implicit surface,
   - determining (T3) coefficients ($w_i$) in function of the input model ($M_I$) and the example models ($M_i$) of the morphable 3D model (MM), such that the input model ($M_I$) is approximated by a linear combination of the example models ($M_i$).

10. Method according to claim 9, comprising transmitting (T4) the coefficients to another device.

11. Device (3) for representing a state of a morphable surface, wherein the morphable surface is defined by a morphable 3D model (MM) comprising a set of example models ($M_i$), where an example model ($M_i$) comprises a 3D field function defining an implicit surface as an isosurface through the field, comprising:

   - means (5, 6) for obtaining 3D data representative of an input surface ($S_I$), which is a state of the morphable surface,
   - means (5, 6) for determining a model ($M_I$) corresponding to the input surface ($S_I$), wherein the geometry of the input surface ($S_I$) is specified by an implicit surface,
   - means (5, 6) for determining coefficients ($w_i$) in function of the input model ($M_I$) and the example models ($M_i$) of the morphable 3D model (MM), such that the input model ($M_I$) is approximated by a linear combination of the example models ($M_i$).

**12.** Computer program (P) comprising instructions executable by a processor (5) for performing the method for representing a state of a morphable surface according to claim 9 or 10 when said instructions are executed by a computer.

**13.** Method for determining a state of a morphable surface, wherein the morphable surface is defined by a morphable 3D model (MM) comprising a set of example models ($M_i$), where an example model ($M_i$) comprises a 3D field function defining an implicit surface as an isosurface through the field, said method being executed by a destination device (4) and comprising:

- obtaining (U1) coefficients ($w_i$) representative of the state of the morphable surface,
- determining (U2) a model ($M_O$) in function of the coefficient ($w_i$), wherein the model ($M_O$) is a linear combination of the example models ($M_i$).

**14.** Method according to claim 13, comprising (U3) displaying the model ($M_O$).

**15.** Device (4) for determining a state of a morphable surface, wherein the morphable surface is defined by a morphable 3D model (MM) comprising a set of example models ($M_i$), where an example model ($M_i$) comprises a 3D field function defining an implicit surface as an isosurface through the field, comprising:

- means (5, 6) for obtaining coefficients ($w_i$) representative of the state of the morphable surface,
- means (5, 6) for determining a model ($M_O$) in function of the coefficient ($w_i$), wherein the model is a linear combination of the example models ($M_i$).

**16.** Computer program (P) comprising instructions executable by a processor (5) for performing the method for determining a state of a morphable surface according to claim 13 or 14 when said instructions are executed by a computer.

**Amended claims in accordance with Rule 137(2) EPC.**

**1.** Method for determining a morphable 3D model (MM) comprising a set of example models ($M_i$), said method being executed by a morphable 3D model determining device (2) and comprising:

- Obtaining (S1) 3D data specifying at least two example surfaces ($S_i$), **characterized in that** it comprises:
- Determining (S3) implicit surfaces ($G_i$) corre-

sponding to the example surfaces ($S_i$), wherein an implicit surface is defined by a 3D field function, wherein said implicit surface is an isosurface through the 3D field,
- Determining the example models ($M_i$) in function of the implicit surfaces ($G_i$).

**2.** Method according to claim 1, wherein determining the example models ($M_i$) in function of the implicit surfaces ($G_i$) comprises:

- determining (S4) a first set of example models ($M'_i$) comprising the implicit surfaces ($G_i$),
- determining (S5) a second set of example models ($M_i$) by applying principal component analysis to the first set of example models ($M'_i$).

**3.** Method according to claim 1 or 2, comprising a rigid alignment step (S2) the example surfaces ($S_i$).

**4.** Method according to one of claims 1 to 3, wherein the example surfaces ($S_i$) are determined in function of captured data.

**5.** Method according to one of claims 1 to 4, wherein the morphable surface comprises a human face, the example surfaces ($S_i$) corresponding to various facial expressions.

**6.** Method according to one of claims 1 to 5, comprising determining (S3) an appearance vector ($C_i$) corresponding to the example surfaces ($S_i$), wherein an appearance vector ($C_i$) is a 3D field function specifying the color of the nearest point of the corresponding example surface.

**7.** Device (2) for determining a morphable 3D model (MM) comprising a set of example models ($M_i$), comprising:

- means (5, 6) for obtaining 3D data specifying at least two example surfaces ($S_i$),
**characterized in that** it comprises:
- means (5, 6) for determining implicit surfaces ($G_i$) corresponding to the example surfaces ($S_i$), wherein an implicit surface ($G_i$) is defined by a 3D field function, wherein said implicit surface is an isosurface through the 3D field,
- means (5, 6) for determining the example models ($M_i$) in function of the implicit surfaces ($G_i$).

**8.** Computer program (P) comprising instructions executable by a processor (5) for performing the method for determining a morphable 3D model according to one of claims 1 to 6 when said instructions are executed by a computer.

**9.** Method for representing a state of a morphable surface, wherein the morphable surface is defined by a morphable 3D model (MM) comprising a set of example models ($M_i$), said method being executed by a source device (3) and comprising:

- obtaining (T1) 3D data representative of an input surface ($S_I$), which is a state of the morphable surface,
**characterized in that** an example model ($M_i$) comprises a 3D field function defining an implicit surface as an isosurface through the field, wherein the method comprises:
- determining (T2) a model ($M_I$) corresponding to the input surface ($S_I$), wherein the geometry of the input surface ($S_I$) is specified by an implicit surface,
- determining (T3) coefficients ($w_i$) in function of the input model ($M_I$) and the example models ($M_i$) of the morphable 3D model (MM), such that the input model ($M_I$) is approximated by a linear combination of the example models ($M_i$).

10. Method according to claim 9, comprising transmitting (T4) the coefficients to another device.

11. Device (3) for representing a state of a morphable surface, wherein the morphable surface is defined by a morphable 3D model (MM) comprising a set of example models ($M_i$), comprising:

- means (5, 6) for obtaining 3D data representative of an input surface ($S_I$), which is a state of the morphable surface,
**characterized in that** an example model ($M_i$) comprises a 3D field function defining an implicit surface as an isosurface through the field, wherein the device comprises:
- means (5, 6) for determining a model ($M_I$) corresponding to the input surface ($S_I$), wherein the geometry of the input surface ($S_I$) is specified by an implicit surface,
- means (5, 6) for determining coefficients ($w_i$) in function of the input model ($M_I$) and the example models ($M_i$) of the morphable 3D model (MM), such that the input model ($M_I$) is approximated by a linear combination of the example models ($M_i$).

12. Computer program (P) comprising instructions executable by a processor (5) for performing the method for representing a state of a morphable surface according to claim 9 or 10 when said instructions are executed by a computer.

13. Method for determining a state of a morphable surface, wherein the morphable surface is defined by a morphable 3D model (MM) comprising a set of example models ($M_i$), said method being executed by a destination device (4) and comprising:

- obtaining (U1) coefficients ($w_i$) representative of the state of the morphable surface,
**characterized in that** an example model ($M_i$) comprises a 3D field function defining an implicit surface as an isosurface through the field, said method comprising:
- determining (U2) a model ($M_O$) in function of the coefficient ($w_i$), wherein the model ($M_O$) is a linear combination of the example models ($M_i$).

14. Method according to claim 13, comprising (U3) displaying the model ($M_O$).

15. Device (4) for determining a state of a morphable surface, wherein the morphable surface is defined by a morphable 3D model (MM) comprising a set of example models ($M_i$), comprising:

- means (5, 6) for obtaining coefficients ($w_i$) representative of the state of the morphable surface,
**characterized in that** an example model ($M_i$) comprises a 3D field function defining an implicit surface as an isosurface through the field, said device comprising:
- means (5, 6) for determining a model ($M_O$) in function of the coefficient ($w_i$), wherein the model is a linear combination of the example models ($M_i$).

16. Computer program (P) comprising instructions executable by a processor (5) for performing the method for determining a state of a morphable surface according to claim 13 or 14 when said instructions are executed by a computer.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 14 30 5593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BLANZ V ET AL: "A MORPHABLE MODEL FOR THE SYNTHESIS OF 3D FACES", COMPUTER GRAPHICS PROCEEDINGS. SIGGRAPH 99; [COMPUTER GRAPHICS PROCEEDINGS. SIGGRAPH], ACM - NEW YORK, NY, USA, 8 August 1999 (1999-08-08), pages 187-194, XP001032901, DOI: 10.1145/311535.311556 ISBN: 978-0-201-48560-8 * abstract * * page 189, left-hand column * | 1-16 | INV. G06T17/00 G06T19/20 |
| Y | Thomas Fabry ET AL: "Surface representations for 3D face recognition" In: "Face recognition", April 2010 (2010-04), InTech, XP055142644, ISBN: 978-9-53-307060-5 pages 273-294, * page 283 - page 286 * | 1-16 | |
| A | Curzio Basso ET AL: "Fitting 3D morphable models using implicit representations", Journal of Virtual Reality and Broadcasting, 28 February 2008 (2008-02-28), XP055142055, Retrieved from the Internet: URL:http://www.jvrb.org/past-issues/4.2007/1279/4200718.pdf [retrieved on 2014-09-30] * the whole document * | 1 | TECHNICAL FIELDS SEARCHED (IPC) G06T |

-/--

The present search report has been drawn up for all claims

| Place of search | Date of completion of the search | Examiner |
|---|---|---|
| Berlin | 14 October 2014 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 5593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOUADIO C ET AL: "Real-time facial animation based upon a bank of 3D facial expressions", COMPUTER ANIMATION 98. PROCEEDINGS PHILADELPHIA, PA, USA 8-10 JUNE 1998, LOS ALAMITOS, CA, USA,IEEE COMPUT. SOC, US, 8 June 1998 (1998-06-08), pages 128-136, XP010285090, DOI: 10.1109/CA.1998.681917 ISBN: 978-0-8186-8541-5 * abstract * | 5 | |
| A | COHEN-OR D ET AL: "THREE-DIMENSIONAL DISTANCE FIELD METAMORPHOSIS", ACM TRANSACTIONS ON GRAPHICS (TOG), ACM, US, vol. 17, no. 2, April 1998 (1998-04), pages 116-141, XP000754616, ISSN: 0730-0301, DOI: 10.1145/274363.274366 * abstract * | 1,7-9, 11-13, 15,16 | |
| A | JONES M W ET AL: "3D distance fields: a survey of techniques and applications", IEEE TRANSACTIONS ON VISUALIZATION AND COMPUTER GRAPHICS, IEEE SERVICE CENTER, LOS ALAMITOS, CA, US, vol. 12, no. 4, July 2006 (2006-07), pages 581-599, XP002495660, ISSN: 1077-2626, DOI: 10.1109/TVCG.2006.56 * the whole document * | 1-16 | TECHNICAL FIELDS SEARCHED (IPC) |

The present search report has been drawn up for all claims

| Place of search | Date of completion of the search | Examiner |
|---|---|---|
| Berlin | 14 October 2014 | Reise, Frank |

EPO FORM 1503 03.82 (P04C01)